**Europäisches Patentamt**

**European Patent Office**

**Office européen des brevets**

(11) Veröffentlichungsnummer: **0 519 256 A1**

# EUROPÄISCHE PATENTANMELDUNG

(21) Anmeldenummer: **92109229.2**

(22) Anmeldetag: **02.06.92**

(51) Int. Cl.5: **B60K 5/12**, B60K 17/00, A01D 34/64

(30) Priorität: **14.06.91 US 715172**

(43) Veröffentlichungstag der Anmeldung:
**23.12.92 Patentblatt 92/52**

(84) Benannte Vertragsstaaten:
**DE ES FR GB IT SE**

(71) Anmelder: **DEERE & COMPANY**
**1 John Deere Road**
**Moline, Illinois 61265(US)**

(72) Erfinder: **Teal, Richard Donald**
**510 South Ridge Circle**
**Horicon, Wisconsin 53032(US)**
Erfinder: **Patterson, Jon Michael**
**659 N. 99th Street**
**Wauwatosa, Wisconsin 53226(US)**
Erfinder: **Hutchison, Wayne Robert**
**N7840 Highway TW**
**Mayville, Wisconsin 53050(US)**
Erfinder: **Hardesty, Terry Dean**
**455 S. Dickason Blvd.**

**Columbus, Wisconsin 53925(US)**
Erfinder: **Hayes, Eugene Gary**
**W9689 Hillside Circle**
**Beaver Dam, Wisconsin 53916(US)**
Erfinder: **Daniel, David Robert**
**4601 Oakridge Drive**
**Midland, Michigan 48640(US)**
Erfinder: **Coffey, Michael John**
**6419 Water Road**
**Sanford, Michigan 48657(US)**
Erfinder: **Wasson, Steven Charles**
**4422 W. Wackerly**
**Midland, Michigan 48640(US)**
Erfinder: **Lorenzo, Luis**
**1305 Sylvan Lane**
**Midland, Michigan 48640(US)**

(74) Vertreter: **Feldmann, Bernhard et al**
**DEERE & COMPANY European Office Patent**
**Department Steubenstrasse 36-42**
**W-6800 Mannheim 1(DE)**

(54) **Fahrzeug mit einem Grundrahmen.**

(57) Bei einem Fahrzeug mit einem Grundrahmen (12), einem Motor (20) und einem von dem Motor aus angetriebenen Endgetriebe (24), das eine mit wenigstens einem antreibbaren Laufrad verbundene Antriebsachse (26) aufweist, sind der Motor (20) und das Endgetriebe (24) mit einem separaten Bauteil (30) verbunden und werden von diesem getragen, der über ein erstes (36) und ein zweites (38) Anschlußmittel an den Grundrahmen (12) angeschlossen ist, wobei das zweite Anschlußmittel an dem Grundrahmen (12) an einer Stelle angreift, die von dem ersten Anschlußmittel in der Längsrichtung des Fahrzeuges abgesetzt ist.

EP 0 519 256 A1

*Fig. 3*

Die Erfindung bezieht sich auf ein Fahrzeug mit einem Grundrahmen, einem Motor und einem von dem Motor aus angetriebenen Endgetriebe, das eine mit wenigstens einem antreibbaren Laufrad verbundene Antriebsachse aufweist.

Bei derartigen Fahrzeugen, die für die Garten- und Rasenpflege eingesetzt werden können (US-A-4 679 382), sind der Motor und das Endgetriebe an unterschiedlichen Stellen am Grundrahmen befestigt. Eine solche Anordnung läßt es zu, daß Motore mit unterschiedlicher Leistung und Endgetriebe in verschiedenen Größen mit dem Grundrahmen verbunden werden können. Bei einem Ausbau des Motors oder des Endgetriebes, beispielsweise zu Wartungszwecken, muß aber zunächst die Antriebsverbindung gelöst werden, was einen unnötigen Zeitaufwand bedeutet. Hinzu kommt, daß das Gewicht des Motors bei diesem bekannten Fahrzeug vollständig von dem Grundrahmen aufgenommen werden muß, weshalb der Grundrahmen auch entsprechend stabil ausgebildet ist. Derartige Grundrahmen weisen daher einen aus Eisenträgern gebildeten Rahmen auf, der auch die beim Anfahren oder beim Beschleunigen auftretenden Kräfte, die zu einem Aufbäumen des Fahrzeuges führen können und an der Anschlußstelle des Endgetriebes an den Grundrahmen wirksam werden, auffangen kann.

Derartige Rahmen erhöhen das Fahrzeuggewicht, was insbesondere bei Fahrzeugen, die nicht ausschließlich für die Straßenfahrt konzipiert sind, wegen der dann auftretenden Bodenverdichtungen unerwünscht ist. Auch sind solche Stahlrahmen aufwendig in der Herstellung und teuer.

Es ist auch nicht mehr neu (US-A-3 122 944), den Motor und das Getriebe in einer Einheit zusammenzufassen. Eine solche Einheit kann natürlich von dem Fahrzeug abgebaut werden, ohne daß die Antriebsverbindung zu lösen ist. Andererseits können dann aber die Komponenten nicht ausgetauscht werden. Auch liegt bei dieser bekannten Anordnung der Motor mit seinem Schwerpunkt vor der antreibbaren Achse, so daß sein Gewicht von einem entsprechenden verbiegungssteifen und stabilen Stahlrahmen getragen werden muß. Auch die Aufbäumkräfte müssen von dem Rahmen aufgefangen werden.

Die mit der Erfindung zu lösende Aufgabe wird darin gesehen, für den Motor und das Endgetriebe eine Befestigungsart am Grundrahmen vorzusehen, die einen Austausch von Motor oder Endgetriebe zuläßt, die bei einem Ausbau von Motor und Endgetriebe ein Lösen deren Antriebsverbindung nicht erfordert und die außerdem nur geringe Kräfte in den Grundrahmen leitet. Diese Aufgabe ist dadurch gelöst worden, daß der Motor und das Endgetriebe mit einem separaten Bauteil verbunden sind und von diesem getragen werden, der über ein erstes und ein zweites Anschlußmittel an den Grundrahmen angeschlossen ist, wobei das zweite Anschlußmittel an dem Grundrahmen an einer Stelle angreift, die von dem ersten Anschlußmittel in der Längsrichtung des Fahrzeuges abgesetzt ist. Auf diese Weise können Motor und Endgetriebe zu Wartungszwecken leicht durch Entfernen der Anschlußmittel abgebaut und einzeln ersetzt werden, falls dies erforderlich ist. Dadurch, daß die Anschlußmittel mit einem gegenseitigen Längsabstand angeordnet sind, wirkt der zwischen beiden verbleibende Teil des Rahmenteiles als Hebelarm und beim Anfahren oder Beschleunigen werden nur sehr geringe Kräfte in den Grundrahmen eingeleitet, der damit in Leichtbauweise hergestellt werden kann, so daß das Gewicht des Gesamtfahrzeuges letztlich auch noch verringert wird.

Der Grundrahmen wird mit dem Gewicht des Motors nicht oder nur unwesentlich belastet, wenn nach einem weiteren Vorschlag der Erfindung, der Motor mit seinem Schwerpunkt vertikal oder nahezu vertikal zu der Antriebsachse ausgerichtet mit dem Bauteil verbunden ist. Durch diesen Vorschlag wird das Gewicht von Motor und Endgetriebe unmittelbar auf die antreibbaren Räder wirken, und der Grundrahmen kann auch aus diesem Grund in Leichtbauweise hergestellt werden.

Ferner wird nach der Erfindung vorgeschlagen, daß der Motor, das Endgetriebe, eine zwischen Motor und Endgetriebe vorgesehene und von dem Bauteil getragene Antriebsverbindung und der Bauteil als eine einzige Baueinheit von dem Grundrahmen abbaubar sind, die derart ausgebildet ist, daß nach dem Abbau der Antrieb zwischen Motor und Endgetriebe bestehen bleibt. Diese Maßnahme ermöglicht, daß nach einer Wartung und vor einem Wiedereinbau Motor und Endgetriebe auf ihre Funktionstüchtigkeit überprüft werden können.

Zweckmäßig kann die Antriebsverbindung einen Riemenantrieb aufweisen, wobei dann eine Antriebswelle des Motors durch eine entsprechende Öffnung im Bauteil geführt ist und eine Riemenscheibe aufnimmt. Auch das Endgetriebe weist dann eine Riemenscheibe mit einer Eingangswelle auf, so daß beide Riemenscheiben über einen Riemen miteinander verbindbar sind. Eine an dem Bauteil angeordnete Spannrolle stellt die erforderliche Riemenspannung her und kann zusätzlich als Fahrzeugkupplung dienen.

Damit der Grundrahmen durch das Gewicht von Motor und Endgetriebe nur unwesentlich oder überhaupt nicht belastet wird, kann ferner vorgesehen werden, daß das erste Anschlußmittel an einer Stelle angeordnet ist, die vertikal oder nahezu vertikal zu der Antriebsachse ausgerichtet ist. Bei der beim Anfahren und beim Beschleunigen auftretenden Tendenz zum Aufbäumen befindet sich diese Stelle dann im Drehpunkt oder nahe am Drehpunkt, so daß von hier keine Kräfte in einem solchen Fall in den Rahmenteil eingeleitet werden.

Der Bauteil kann einen plattenähnlichen Teil aufweisen und ist damit in Form einer Befestigungsplatte ausgebildet.

Ferner kann der Bauteil zu seinem Anschluß an dem Grundrahmen wenigstens einen ersten Winkelteil, über den das erste Anschlußmittel mit dem Grundrahmen verbunden ist, und einen zweiten Winkelteil aufweisen, über den das zweite Anschlußmittel mit dem Grundrahmen verbunden ist.

Im Einzelnen kann der Bauteil derart ausgebildet sein, daß er einen sich im wesentlichen horizontal erstreckenden Plattenteil aufweist, an dessen beiden Seiten je ein erster Winkelteil angeordnet ist, und an dessen Stirn- oder Rückseite der zweite Winkelteil angeordnet ist. Hierbei sind die beiden ersten Winkelteile an Stellen angeordnet sind, die vertikal oder etwa vertikal zu der Antriebsachse ausgerichtet sind, wobei der zweite Winkelteil von dem horizontalen Plattenteil aus sich nach oben erstreckt. Die beiden ersten Winkelteile können etwa im mittleren seitlichen Bereich des sich horizontal erstreckenden Plattenteils angeordnet sein.

Eine derartige Ausbildung des Bauteiles erbringt dann nach einem weiteren Vorschlag der Erfindung den Vorteil, daß der Motor auf dem sich horizontal erstreckenden Plattenteil des Bauteiles angeordnet ist und das Endgetriebe von unten mit sich horizontal erstreckenden Schenkeln der ersten Winkelteile verbunden ist.

Gesonderte Anschlußmittel für den Anbau des Endgetriebes an den Bauteil sind nicht erforderlich, wenn die ersten Anschlußmittel das Endgetriebe auch mit den beiden ersten Winkelteilen verbinden.

Die besondere Anschlußweise des Motors erlaubt eine Leichtbauweise des Grundrahmens, der damit auch aus Kunststoff hergestellt werden kann, wodurch eine kostengünstige Herstellungsart erreicht ist.

Bei einer Kunststoffbauweise des Grundrahmens bietet es sich ferner noch an, daß der Grundrahmen im Bereich des ersten Anschlußmittels mit mindestens einer Öffnung versehen ist, durch die sich das Anschlußmittel erstreckt, das dort mit einem Abstandshalter versehen ist, dessen Höhe der Stärke des Grundrahmens im Bereich seiner Öffnung entspricht oder kleiner ist. Auf diese Weise werden beim Verspannen Quetschungen des Grundrahmens vermieden. Hierzu kann nach der Erfindung vorgesehen sein, daß das erste Anschlußmittel mindestens eine Schraube aufweist, über die das Endgetriebe mit dem Bauteil verschraubt ist, die sich durch die Öffnung im Grundrahmen erstreckt und die mit dem Grundrahmen über eine Anschlagplatte verbunden ist. In der Öffnung des Grundrahmens befindet sich dann eine das Endgetriebe an dem Bauteil sichernde Mutter, die zugleich als Abstandshalter wirkt.

Schließlich kann das zweite Anschlußmittel symmetrisch zur Längsmittelachse des Fahrzeuges und in Fahrzeuglängsrichtung gesehen vor und höher als das erste Anschlußmittel angeordnet sein.

In der Zeichnung ist ein nachfolgend näher erläutertes Ausführungsbeispiel der Erfindung dargestellt. Es zeigt:

Fig. 1    ein Fahrzeug für die Rasen- und Grundstückspflege in perspektivischer Ansicht,

Fig. 2    den rückwärtigen Teil des Fahrzeuges teilweise im Schnitt,

Fig. 3    den Grundrahmen des Fahrzeuges mit einer Befestigungsplatte und dem Endgetriebe in auseinandergezogener Darstellung,

Fig. 4    den rückwärtigen Teil des Fahrzeuges in der Draufsicht,

Fig. 5    das Fahrzeug von rückwärts in auseinandergezogener Darstellung und teilweise im Schnitt und

Fig. 6    die Verbindung des Endgetriebes mit dem Grundrahmen über eine Befestigungsplatte.

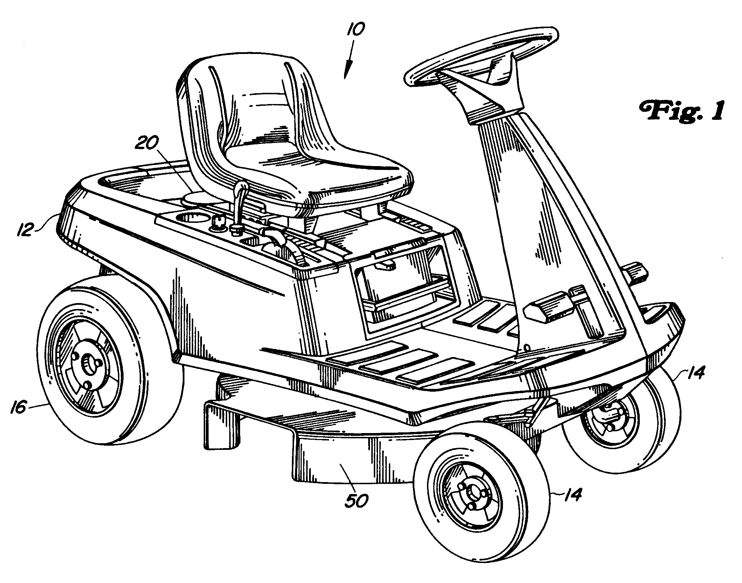

In Fig. 1 der Zeichnung ist ein Fahrzeug 10 für die Grundstückspflege in perspektivischer Darstellung wiedergegeben, dessen Grundrahmen 12 aus Kunststoff besteht. Des weiteren wurde eine Schalenbauweise gewählt. Der Grundrahmen 12 wird von rückwärtigen und frontseitigen Laufrädern 16 und 14 getragen. Die frontseitigen Laufräder 14 sind lenkbar und die rückwärtigen Laufräder 16 sind antreibbar. Das Fahrzeug 10 ist ferner mit einem Mähwerksgehäuse 50, einem Fahrersitz, einem Schaltmodul, einem Steuerrad und mit Pedalen für die Betätigung der Bremsen bzw. für die Kupplung ausgerüstet.

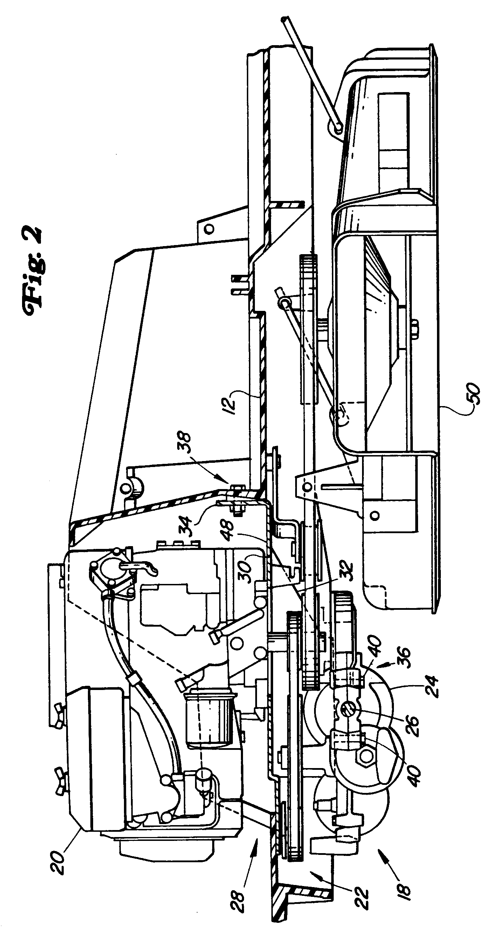

Eine Antriebsvorrichtung 18 ist in Fig. 2 erkennbar. Sie dient zum Antrieb der rückwärtigen Laufräder 16. Eine Kraftquelle oder ein Verbrennungsmotor 20 ist am rückwärtigen Ende des Fahrzeuges 10 angeordnet. Der Motor 20 ist über einen Riementrieb 22 mit einem Endgetriebe 24 verbunden, so daß dieses von dem Motor aus angetrieben werden kann. Das Endgetriebe 24 selbst weist Zahnräder und / oder einen hydrostatischen Antrieb, ein Differential und eine Antriebsachse 26 auf, um die Leistung des Motors 20 auf die antreibbaren Laufräder 16 übertragen zu können.

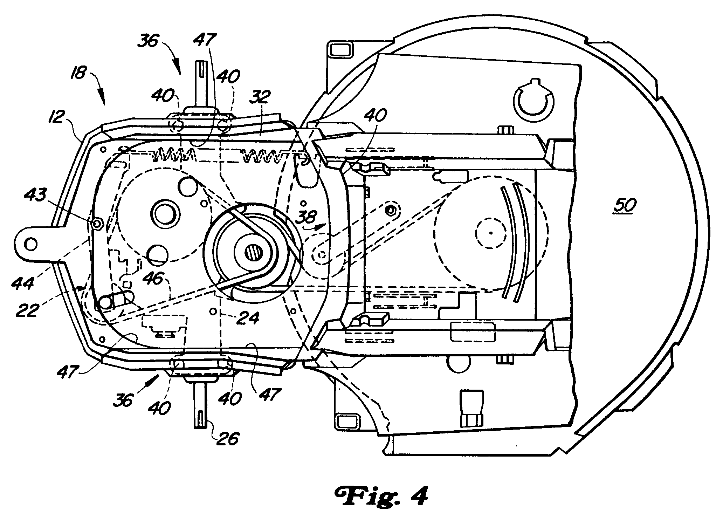

Eine in den Fig. 2 bis 5 dargestellte Befestigungseinrichtung 28 dient zum Anschluß der Antriebsvorrichtung 18 an den aus Kunststoff bestehenden Grundrahmen 12. Sie wird durch einen sich im wesentlichen horizontal erstreckenden plattenähnlichen Teil geprägt, der in der nachfolgenden Beschreibung als Befestigungsplatte 30 bezeichnet ist. Die Befestigungsplatte 30 dient zum Anschluß des Motors 20, des Endgetriebes 24 und des Riemengetriebes an den Grundrahmen 12. Sie weist an ihren Seiten einen ersten nach unten zeigenden und nach außen abgebogenen Winkelteil 32 und an ihrer Frontseite einen nach oben zeigenden Winkelteil 34 auf. Diese Winkelteile steifen die Befestigungsplatte 30 aus und verstärken sie.

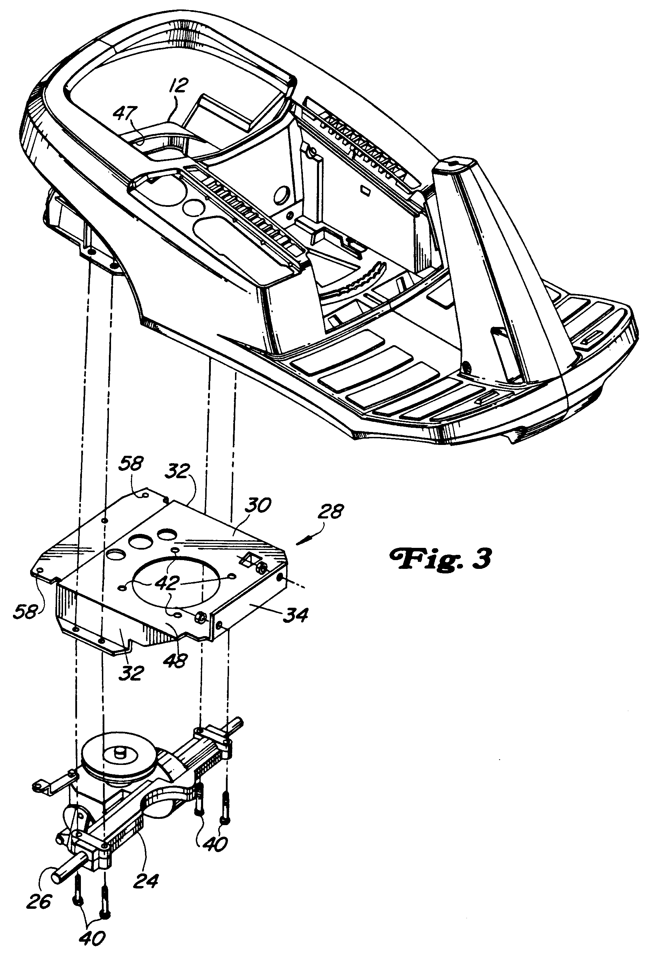

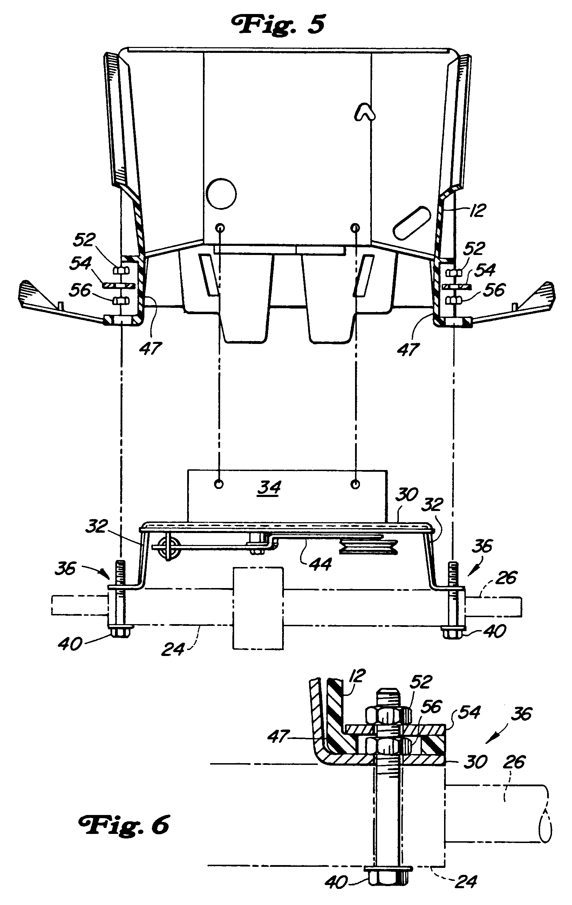

Sie dienen außerdem zum Anschluß der Befestigungsplatte 30 an den Grundrahmen 12, wozu erste und zweite Anschlußmittel 36 und 38 vorgesehen sind. Das erste Anschlußmittel 36 besteht aus zwei Paar Schrauben 40, die im Bereich der beiden seitlichen Antriebsachsen 26 die Befestigungsplatte 30 mit außen und seitlich liegenden Bereichen des Grundrahmens 12 verbinden sollen, wie es im einzelnen aus Fig. 3 zu ersehen ist. Über das zweite Anschlußmittel 38 wird der nach oben weisende Winkelteil 34 der Befestigungsplatte 30 mit dem Grundrahmen 12 im Bereich dessen Längsmittelebene verbunden, was in Fig. 2 erkennbar ist. Befestigungslöcher 42 im horizontalen Bereich der Befestigungsplatte 30 sind für den Schraubanschluß des Motors 20 vorgesehen (Fig. 3), so daß der Motor oben auf der Befestigungsplatte aufsitzen kann. Das Endgetriebe 24 wird von unten mit der Befestigungsplatte verschraubt, wozu ebenfalls die Schrauben 40 des ersten Anschlußmittels dienen. Dies ist in Fig. 6 im einzelnen dargestellt, auf die noch näher einzugehen ist. Desweiteren ist noch eine rückwärtige Befestigungsschraube 43 (Fig. 3) vorgesehen, über die das rückwärtige Ende des Endgetriebes 24 mit der Befestigungsplatte 30 verschraubbar ist und über die Torsionskräfte in die Befestigungsplatte 30 einleitbar sind. Die Befestigungsschraube 43 nimmt ferner noch einen Kupplungsarm 44 horizontal schwenkbar auf, über den im Einsatz ein Riemen 46 des Riementriebes 22 entspannt werden kann, wodurch die Antriebsverbindung vom Motor zum Endantrieb unterbrochen wird.

In Fig. 3 ist der Verbrennungsmotor nicht eingezeichnet, doch ist ein nach oben und unten offener abgeteilter Raum 47 erkennbar, der zur Aufnahme der Befestigungsplatte 30 mit Endgetriebegehäuse 24 und Motor 20 dient. Im montierten Zustand ist dann der Raum 47 nach unten verschlossen nach oben hin jedoch noch offen.

Fig. 6 zeigt das erste Anschlußmittel 36 mit einer Schraube 40. Über dieses Befestigungsmittel wird das Endgetriebe 24 mit der Befestigungsplatte 30 und letztere mit dem Grundrahmen 12 des Fahrzeuges 10 verschraubt. Die Schrauben 40 werden von unten durch das Endgetriebe 24, die Winkelteile 32 der Befestigungsplatte 30 und durch den Grundrahmen 12 gesteckt. An dem oberen mit Gewinde versehenen Ende befindet sich jeweils eine Mutter 52, über die ein Anschlagteil 54 auf den Grundrahmen 12 gedrückt wird. In den in dem Grundrahmen 12 zum Durchtritt der Schrauben 40 vorgesehenen Löchern findet jeweils eine weitere auf die Schrauben 40 aufgeschraubte Mutter 56 Platz, die zum einen zum Verbinden des Endgetriebes mit der Befestigungsplatte 30 und zum anderen als Abstandshalter dient, damit der aus Kunststoff bestehende Grundrahmen im Bereich seiner Durchtrittslöcher für die Schrauben 40 nicht zu sehr zusammengepreßt wird. Im fest angezogenen Zustand der Muttern 52 wird damit verhindert, daß der Grundrahmen in diesem Bereich derart abgequetscht wird, daß der Halt des Anschlagteils 54 verloren gehen könnte oder das am Grundrahmen ungewollte Verformungen auftreten. Die Anschlagteile 54 sind natürlich hierzu ebenfalls entsprechend breit auszubilden, wobei außerdem die im fest angezogenen Zustand der Schrauben 40 entstehenden Materialbeanspruchungen im Kunststoff besser verteilt werden. Im Ganzen ergibt sich somit eine äußerst stabile und verformungssteife Befestigung, wozu nicht zuletzt auch die nach seitlich außen und horizontal verlaufenden Schenkel der Winkelteile 32 beitragen.

Die Befestigungsplatte 30 weist noch an ihrem rückwärtigen Ende zusätzliche Befestigungslöcher 58 auf, so daß gegebenenfalls auch das rückwärtige Ende des Grundrahmens 12 noch mit der Befestigungsplatte 30 verschraubt werden kann, um dem Grundrahmen eine zusätzliche Steifigkeit zu verleihen.

Der Verbrennungsmotor 20 ist derart mit der Befestigungsplatte 30 zu verbinden bzw. zu verschrauben, daß sich im eingebauten Zustand der Schwerpunkt des Motors über oder zumindest im Bereich einer durch die Antriebsachsen 26 gehenden und gedachten Längsachse befindet. Diese vertikale Ausrichtung vom Schwerpunkt des Motors zu den Antriebsachsen führt dazu, daß das Gewicht des Motors direkt auf den Boden über die Befestigungsplatte 30, das Endgetriebe 24, die Antriebsachsen 26 und die rückwärtigen Laufräder 16 übertragen wird, ohne das der Grundrahmen 12 Biegemomente aufnehmen müßte. Dies wäre der Fall, wenn der Schwerpunkt des Motors horizontal versetzt wäre, wobei dann der Motor die Tendenz hätte, um die Längsachse der Antriebsachsen 26 zu verschwenken. In einem solchen Fall würden erhebliche Momente wirksam und der Grundrahmen müßte wesentlich stärker und verwindungssteifer ausgebildet werden. Durch die Anordnung des Schwerpunktes des Motors direkt über den Antriebsachsen 26 muß der Grundrahmen 12 das Motorgewicht nicht aufnehmen, das unmittelbar über die Befestigungsplatte 30, das Endgetriebe, die Antriebsachsen und die rückwärtigen Laufräder auf den Boden wirkt. Da damit von dem Motorgewicht ausgehende konzentrierte Momente vermieden oder zumindest reduziert sind, kann der Grundrahmen erheblich kostengünstiger ausgebildet werden.

Fahrzeugrahmen müssen aber auch noch anderen Belastungen standhalten, die beispielsweise beim Beschleunigen auftreten. Wird das Fahrzeug 10 bei der Vorwärtsfahrt beschleunigt, so muß die Drehzahl des Verbrennungsmotors erhöht werden und das Endgetriebe und die Laufräder drehen dann plötzlich schneller um. Dies führt zu einer Tendenz, daß das Fahrzeug um seine Treibachse, das heißt die rückwärtigen Antriebsachsen, nach oben und nach rückwärts verschwenken will. Bei einer plötzlichen Beschleunigung beim Rückwärtsfahren ist diese Tendenz umgekehrt und das Fahrzeug ist bestrebt, nach unten zu verschwenken. Von den angetriebenen Rädern aus werden dann diese Momente in den Fahrzeugrahmen eingeleitet, der diese auffangen muß. Das Endgetriebe 24 des vorstehend beschriebenem Fahrzeuges 10 ist mit der Befestigungsplatte 30 verschraubt, weshalb die beim Beschleunigen auftretenden und von den angetriebenen Rädern ausgehenden Kräfte zunächst in die Befestigungsplatte 30 geleitet werden. Die Befestigungsplatte 30 will in solchen Fällen um die Antriebsachsen 26 verschwenken. Beim Beschleunigen bei Vorwärtsfahrt ist das nach oben, so daß auch der zweite Winkelteil 34, der frontseitig an der Befestigungsplatte 30 vorgesehen ist, nach oben verschwenken will. Damit will auch das zweite Anschlußmittel 38 nach oben und rückwärts verschwenken, wodurch an dieser Verbindungsstelle auf den Grundrahmen 12 auch derart eingewirkt wird, daß er nach oben und rückwärts verschwenken will. An der Stelle des Grundrahmens, an der das zweite Anschlußmittel 38 angreift, müßte der Grundrahmen entsprechend stabil ausgebildet sein, um diesen Kräften standzuhalten. Andererseits wäre zu befürchten, daß dann der Grundrahmen in diesem Bereich brechen könnte.

Beim bevorzugten Ausführungsbeispiel ist dies jedoch nicht zu befürchten, weil es die Prinzipien des Hebelgesetzes anwendet, um die beim Beschleunigen auftretenden und auf den Grundrahmen einwirkenden Kräfte zu reduzieren. Wie insbesondere aus der Fig. 2 hervorgeht, liegt das zweite Anschlußmittel 38 mit einem beträchtlichen Abstand vor den Antriebsachsen 26, um die die Befestigungsplatte 30 verschwenken will. Es ist damit ein Hebelarm 47 geschaffen und die von dem Grundrahmen benötigte Kraft, um der Drehbewegung zu widerstehen, ist wegen des relativ langen Abstandes zwischen Drehpunkt und zweitem Anschlußmittel relativ gering. Je länger dieser Hebelarm 47 ist, um so geringer ist die Kraft, die benötigt wird, um der Drehung zu widerstehen. Beim Ausführungsbeispiel ist der Hebelarm relativ lang, so daß die Gegenkraft gering ist, was sich wiederum darin ausdrückt, daß der Grundrahmen auch im Bereich der Anschlußstelle des zweiten Anschlußmittels 38 relativ leicht und dünnwandig ausgebildet werden kann. Auch diese Befestigungsart trägt mit dazu bei, daß ein kostengünstiges Material, wie Plastikwerkstoff für den gesamten Grundrahmen Verwendung finden kann.

Ist das rückwärtige Ende des Grundrahmens 12 noch über die Befestigungslöcher 58 mit der Befestigungsplatte verschraubt, so werden an dieser Stelle nur relativ geringe Kräfte absorbiert, da das rückwärtige Ende des Grundrahmens 12 dazu neigt, sich nach oben oder unten auszubiegen.

Wird das Fahrzeug 10 zum Grasmähen eingesetzt, so ist zwischen seinen Achsen das Mähwerksgehäuse 50 aufgehängt. Das gemähte Gras kann direkt auf dem abgemähten Rasen abgelegt werden, was jedoch vielfach nicht erwünscht ist. Moderne Fahrzeuge für den Rasenschnitt sind deshalb noch mit einem Grasfangbehälter ausgerüstet. Auch bei dem Fahrzeug des bevorzugten Ausführungsbeispiel ist dies möglich, da ein Grasfangbehälter, der der Einfachheit halber in der Zeichnung nicht dargestellt ist, an die Befestigungsplatte 30 angebaut werden kann. Hierdurch wird das Gewicht des Grasfangbehälters direkt auf die Befestigungsplatte 30 einwirken und im wesentlichen über das Endgetriebe 24 auf die rückwärtigen Laufräder 16 übertragen, ohne daß es direkt in den Grundrahmen geleitet würde. Gewisse Gewichtsanteile werden natürlich über die beiden Anschlußmittel 36 und 38 in den Grundrahmen 12 geleitet, doch sind diese wiederum relativ klein, so daß der Ausbildung des Grundrahmens aus Kunststoff auch die Anbringung eines Grasfangbehälters nicht im Wege steht.

Beim bevorzugten Ausführungsbeispiel sind im eingebauten Zustand der Motor 20, das Endgetriebe und auch der Riementrieb 22, der zwischen Motor und Endgetriebe vorgesehen ist, mit der Befestigungsplatte 30 verschraubt, die damit alle diese Komponenten mit dem Grundrahmen 12 des Fahrzeuges 10 verbindet.

Die Antriebswelle des Motors erstreckt sich durch die Befestigungsplatte nach unten und nimmt eine Riemenscheibe des Riementriebes 22 auf, der zweckmäßig unterhalb der Befestigungsplatte 30 angeordnet ist. Die drei Komponenten 20, 22 und 24 und die sie tragende Befestigungsplatte 30 wirken als ein Modul, das als Einheit für Wartungsarbeiten an einer der Komponenten von dem Fahrzeug 10 abgebaut werden kann. Hierzu müssen lediglich die Anschlußmittel 36, 38 entfernt werden, nachdem zu dem Schaltmodul und zu dem Kupplungs- und Bremspedal führende in der Zeichnung nicht dargestellte Gestängeverbindungen gelöst wurden. Auch sind natürlich entsprechende Versorgungsleitungen, wie Benzinleitung, Kabel etc. zu entfernen bzw. zu lösen. Sind alle Verbindungen zu dem Motor und dem Endgetriebe gelöst und auch die Anschlußmittel entfernt, so braucht der Grundrahmen 12 nur angehoben und auf den vorderen Laufrädern nach vorne geschoben zu werden, um einen Zugang zu den drei vorgenannten Komponenten zu erhalten. Da der Grundrahmen 12 aus Kunststoff hergestellt ist, kann er leicht an seinem rückwärtigen Ende von einer Wartungsperson hochgehoben werden. Für eine Wartung brauchen die nun von allen Seiten zugänglichen Komponenten 20, 22 und 24 nicht unbedingt auseinandergebaut zu werden. Die zusammengebauten Komponenten können nach ihrer Wartung vor dem Wiedereinbau leicht auf ihre einwandfreie Funktion überprüft werden. Zum Wiedereinbau des Moduls braucht der Grundrahmen 12 lediglich nach rückwärts gerollt und über den ersten Winkelteilen 32 abgelassen zu werden. Danach können die Anschlußmittel 36, 38 wieder eingesetzt werden.

Bei der Erstmontage bietet es sich an, daß die Komponenten 20, 22, 24 zunächst mit der Befestigungsplatte 30 verschraubt werden. Das so gebildete Modul kann dann noch vor dem Einbau auf seine Funktionstüchtigkeit überprüft werden.

Der Grundrahmen 12 läßt es außerdem zu, daß Motore und Endgetriebe unterschiedlicher Größe und Stärke auf die Befestigungsplatte 30 montierbar sind, ohne daß hierzu der Grundrahmen geändert werden müßte. Identisch ausgebildete Grundrahmen können somit mit unterschiedlichen Getrieben und Motoren - je nach den Wünschen des Endverbrauchers - in einfacher Weise bestückt werden. Zusätzliche Herstellungs- und Werksstückkosten für unterschiedliche Grundrahmen entstehen damit nicht.

**Patentansprüche**

1. Fahrzeug mit einem Grundrahmen (12), einem Motor (20) und einem von dem Motor (20) aus angetriebenen Endgetriebe (24), das eine mit wenigstens einem antreibbaren Laufrad (16) verbundene Antriebsachse (26) aufweist, dadurch gekennzeichnet, daß der Motor (20) und das Endgetriebe (24) mit einem separaten Bauteil (30) verbunden sind und von diesem getragen werden, der über ein erstes und ein zweites Anschlußmittel (36, 38) an den Grundrahmen (12) angeschlossen ist, wobei das zweite Anschlußmittel (38) an dem Grundrahmen (12) an einer Stelle angreift, die von dem ersten Anschlußmittel (36) in der Längsrichtung des Fahrzeuges (10) abgesetzt ist.

2. Fahrzeug nach Anspruch 1, dadurch gekennzeichnet, daß der Motor (20) mit seinem Schwerpunkt vertikal oder nahezu vertikal zu der Antriebsachse (26) ausgerichtet mit dem Bauteil (30) verbunden ist.

3. Fahrzeug nach Anspruch 1 oder 2, dadurch gekennzeichnet, daß der Motor (20), das Endgetriebe (24), eine zwischen Motor (20) und Endgetriebe (24) vorgesehene und von dem Bauteil (30) getragene Antriebsverbindung und der Bauteil (30) als eine einzige Baueinheit von dem Grundrahmen (12) abbaubar sind, die derart ausgebildet ist, daß nach dem Abbau der Antrieb zwischen Motor (20) und Endgetriebe (24) bestehen bleibt.

4. Fahrzeug nach Anspruch 3, dadurch gekennzeichnet, daß die Antriebsverbindung einen Riemenantrieb (22) aufweist.

5. Fahrzeug nach einem oder mehreren der vorherigen Ansprüche, dadurch gekennzeichnet, daß das erste Anschlußmittel (36) an einer Stelle angeordnet ist, die vertikal oder nahezu vertikal zu der Antriebsachse (26) ausgerichtet ist.

6. Fahrzeug nach Anspruch 1, dadurch gekennzeichnet, daß der Bauteil (30) einen plattenähnlichen Teil aufweist.

7. Fahrzeug nach einem oder mehreren der vorherigen Ansprüche, dadurch gekennzeichnet, daß der Bauteil (30) wenigstens einen ersten Winkelteil (32), über den das erste Anschlußmittel (36) mit dem Grundrahmen (12) verbunden ist, und einen zweiten Winkelteil (34) aufweist, über den das zweite Anschlußmittel (38) mit dem Grundrahmen (12) verbunden ist.

8. Fahrzeug nach Anspruch 7, dadurch gekennzeichnet, daß der Bauteil (30) einen sich im wesentlichen horizontal erstreckenden Plattenteil aufweist, an dessen beiden Seiten je ein erster Winkelteil (32) angeordnet ist, und an dessen Stirn- oder Rückseite der zweite Winkelteil (34) angeordnet ist.

9. Fahrzeug nach Anspruch 8, dadurch gekennzeichnet, daß die beiden ersten Winkelteile (32) an Stellen angeordnet sind, die vertikal oder etwa vertikal zu der Antriebsachse (26) ausgerichtet sind, wobei der zweite Winkelteil (34) von dem horizontalen Plattenteil aus sich nach oben erstreckt.

10. Fahrzeug nach Anspruch 8, dadurch gekennzeichnet, daß die beiden ersten Winkelteile (32) etwa im mittleren seitlichen Bereich des sich horizontal erstreckenden Plattenteils angeordnet sind.

**11.** Fahrzeug nach einem oder mehreren der vorherigen Ansprüche, dadurch gekennzeichnet, daß der Motor (30) auf dem sich horizontal erstreckenden Plattenteil des Bauteiles (30) angeordnet ist und das Endgetriebe (24) von unten mit sich horizontal erstreckenden Schenkein der ersten Winkelteile (32) verbunden ist.

**12.** Fahrzeug nach Anspruch 11, dadurch gekennzeichnet, daß die ersten Anschlußmittel (36) das Endgetriebe (24) mit den beiden ersten Winkelteilen (32) verbinden.

**13.** Fahrzeug nach einem oder mehreren der vorherigen Ansprüche, dadurch gekennzeichnet, daß der Grundrahmen (12) aus Kunststoff hergestellt ist.

**14.** Fahrzeug nach einem oder mehreren der vorherigen Ansprüche, dadurch gekennzeichnet, daß der Grundrahmen (12) im Bereich des ersten Anschlußmittels (36) mit mindestens einer Öffnung versehen ist, durch die sich das Anschlußmittel (36) erstreckt, das dort mit einem Abstandshalter versehen ist, dessen Höhe der Stärke des Grundrahmens im Bereich seiner Öffnung entspricht oder kleiner ist.

**15.** Fahrzeug nach Anspruch 14, dadurch gekennzeichnet, daß das erste Anschlußmittel (36) mindestens eine Schraube (40) aufweist, über die das Endgetriebe (24) mit dem Bauteil (30) verschraubt ist, die sich durch die Öffnung im Grundrahmen (129 erstreckt und die mit dem Grundrahmen (12) über eine Anschlagplatte (54) verbunden ist.

**16.** Fahrzeug nach einem oder mehreren der vorherigen Ansprüche, dadurch gekennzeichnet, daß das zweite Anschlußmittel (38) symmetrisch zur Längsmittelachse des Fahrzeuges (10) und in Fahrzeuglängsrichtung gesehen vor und höher als das erste Anschlußmittel (36) angeordnet ist.

*Fig. 1*

*Fig. 2*

Fig. 3

**Fig. 4**

## *Fig. 5*

## *Fig. 6*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-4 679 382 (SARUHASHI ET AL.) <br> * das ganze Dokument * <br> --- | 1,2,4 | B60K5/12 <br> B60K17/00 <br> A01D34/64 |
| A | PATENT ABSTRACTS OF JAPAN <br> vol. 7, no. 271 (M-260)(1416) 3. Dezember 1983 <br> & JP-A-58 149 825 ( NISSAN JIDOSHA K.K. ) <br> 6. September 1983 <br> * Zusammenfassung * <br> --- | 1,3,5 | |
| D,A | US-A-3 122 944 (BOEHNER, BALBASCHEWSKI) <br> * das ganze Dokument * <br> --- | 1,3 | |
| A | US-A-2 860 716 (FLOCK) <br> * das ganze Dokument * <br> ----- | 1,4 | |
| | | | **RECHERCHIERTE SACHGEBIETE (Int. Cl.5)** <br><br> B60K <br> A01D <br> F16H |

Der vorliegende Recherchenbericht wurde für alle Patentansprüche erstellt

| Recherchenort | Abschlußdatum der Recherche | Prüfer |
|---|---|---|
| DEN HAAG | 21 SEPTEMBER 1992 | TOPP-BORN S. |